# EUROPEAN PATENT APPLICATION

(11) **EP 0 859 078 A1**
(43) Date of publication of application: **19.08.1998**
(21) Application number: 98100764.4
(22) Date of filing: 17.01.1998
(51) Int. Cl.: D06F 39/08, F16L 55/26

(54) **Conduit for conveying a flow of fluid under pressure**

(30) Priority: 13.02.1997 IT PN970010
(71) Applicant: Electrolux Zanussi S.p.A., 33170 Pordenone (IT)
(72) Inventor: Finola, Giancarlo, 27029 Vigevano, Pavia (IT); Portaluppi, Raniero, 20010 Santo Stefano Ticino, Milano (IT)
(74) Representative: Busca, Luciano

(57) **Abstract**

The conduit comprises a tube (3) that is surrounded be a see-through sheath (10) with which it forms a sealed jacket (13) into which the fluid conveyed along the tube is able to seep in the case of a rupture in the same tube. Said jacket houses a mass (14) of a material that is capable of colouring the fluid seeping into the same jacket.

## Description

The present invention refers to a safety conduit for conveying a flow of fluid, preferably a liquid under pressure.

Particularly, but not exclusively, the present invention refers to an anti-flood water conduit for a household appliance such as a dishwashing or a clothes washing machine.

Water conduits for home appliances are largely known to comprise, for instance, a water delivery tube which connects the appliance with a water faucet and which is surrounded by a sheath with which it forms a seated jacket in which water is retained in the case of a rupture of the tube.

For example, EP-A-0 609 842 describes a conduit of the above cited kind, in which the water seeping into the sealed jacket formed therearound is capable of actuating a moving safety element housed in a box-shaped fitting connection. The latter is provided with a see-through window through which a coloured mark provided on the mechanical safety element becomes in this way visible, thereby indicating an alarm condition.

Such a solution actually enables the user to take the necessary measures to eliminate the failure before also the outer sheath can break down.

On the other hand, said coloured alarm signal appears only at a well defined site, ie. in correspondence of the above cited see-through window, which, depending on the actual installation conditions, may also be poorly visible or even not visible at all.

Furthermore, since the see-through window must be provided on a box-shaped container that houses also a therewith associated moving element, which must in turn be associated to related actuating means, the same container turns out to be fairly complex, thereby making the structure of the entire conduit assembly undesirably complex and expensive. The presence of moving mechanical elements gives further rise to a problem in that said elements could sooner or later be subject to jamming , thereby making the whole conduit unreliable.

It therefore is a main purpose of the present invention to provide a conduithaving a particularly simple structure and being reliable in its operation, which is capable of conveying a flow of fluid under pressure under full safety conditions and at the same time signalling any possible alarm condition in a clear, conspicuous manner.

It is a further purpose of the present invention to provide a conduit of the above cited kind, which can be applied in a particularly advantageous manner to a household appliance.

According to the present invention, these aims are reached in a conduit for conveying a flow of fluid under pressure, which embodies the characteristics as recited in the appended claims.

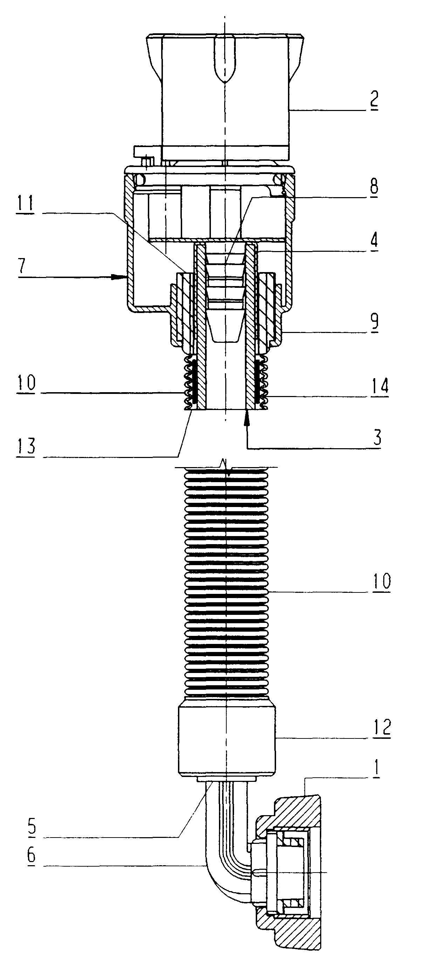

Anyway, the features and advantages of the invention will be more readily understood from the description that is given below by way of non-limiting example with reference to the accompanying drawing, in which the only Figure is a schematical, partially sectional view of the conduit according to the present invention, in a preferred embodiment thereof that is particularly suitable for use in connection with a home appliance such as a dishwashing or similar machine.

The conduit according to the invention is adapted to convey a flow of fluid under pressure having a pre-determined colour, wherein such a fluid shall be intended to be water in the example described below. It will therefore be appreciated that the term "pre-determined colour", as used here, shall be understood to also include the substantial transparence of the water or a transparent gaseous medium such as air.

In a per sè known manner, the conduit is for instance adapted to connect a home appliance (not shown) to a water supply faucet (not shown, either) by means of respective threaded joining rings 1, 2, preferably in association with controlled valve means (not shown).

The conduit mainly comprises a tube 3 (preferably of some neutral colour) with at least an inlet 4 and at least an outlet (schematically indicated at 5), which are preferably situated at the opposite end portions of the tube.

In particular, the outlet end portion 5 of the tube 3 is fitted in a water-tight manner on to a rigid tubular connector 6 carrying the threaded ring 1 for attachment to the home appliance. On the other hand, the inlet end portion 4 of the tube 3 is associated to the threaded ring 2 which is provided for attachment to the supply water faucet and is for instance mounted rotatably on the end portion of a hollow connector 7, in a substantially per sè known manner.

Said hollow connector 7 comprises centrally a rigid tubular portion 8 onto which the end portion 4 of the tube is fitted in a water-tight manner. The connector 7 further comprises an inlet fitting 9 which is arranged concentrically with respect to the portion 8 and onto which the end portion of a preferably flexible and corrugated is sheath 10 is fitted in a water-tight manner through the interposition of a seal 11. Furthermore, according to a feature of the present invention the sheath 10 is substantially transparent. It will of course be appreciated that, alternatively, only a portion of said sheath 10 may be transparent. In any case, the sheath 10 substantially surrounds the tube 3 and its opposite end portion is closed in a water-tight manner in correspondence of the connector 6 by means of a locking ring 12 or similar means.

In a per sè known manner, the tube 3 and the sheath 10 define a substantially sealed, water-tight jacket 13 into which, in the case of the tube 3 breaking down or leaking, the fluid being conveyed through the same tube is able to seep. In the example being described, therefore, the sealed jacket 13 is able to collect the water that may possibly leak from the tube 3, thereby preventing the room in which the appliance is installed from being flooded.

According to a further feature of the present invention, alarm means are provided in the sealed jacket 13 which are adapted to impart a different colour to the fluid seeping into the same jacket. If the fluid conveyed through the tube 3 is a liquid, eg. water, said alarm means preferably comprise a mass 14 of (either solid or liquid) colouring material that is at least partially soluble in the same liquid. For instance, the mass 14 may be provided in the form of at least a soluble pellet, or the like, of any appropriate highly concentrated dyeing matter that is readily available on the market.

In a preferable manner, anyway, said mass 14 of dyeing matter is provided in the form of impregnation of a cloth ribbon, or the like, that can be most easily and conveniently wound round the tube 3.

In any case, as soon as the dyestuff 14 dissolves in the leaking water that seeps into the sealed jacket 13, the resulting colour variation in the water in said jacket becomes visible, through the transparent sheath 10, all along the extension of the same sheath.

The particular effectiveness of such an indication of an alarm condition arising from a rupture of the tube 3 can be readily appreciated, since the large surface area and the considerable length of the sheath 10, through which the above mentioned variation in the colour of the water (even at a distance from the mass 14 of dyeing matter) becomes visible, enable the resulting alarm signal to be particularly conspicuous and, therefore, effective regardless of the way in which the conduit is actually installed. The user is therefore put in a position as to be able to appropriately intervene and take the necessary measures before even the sheath 10 may break down and cause the room to be flooded.

Due notice should also be taken of the particular simplicity and reliability of the conduit according to the present invention, in which the alarm situation is indicated without any movement of any mechanical element.

It will of course be appreciated that the above described conduit may be the subject of a number of modifications without departing from the scope of the present invention.

For example, the alarm means may include a mass 14 of coloured material, such as powder or granular material, capable of diluting in the fluid seeping into the sealed jacket 13. Such a solution is for example fit for enabling the fluid leaking from the tube 3 to take a different colour in all cases in which said fluid is a gaseous one.

Although the conduit according to the present invention has been described with reference to an application thereof in a home appliance, it will be appreciated that it may be used in any other application, even an industrial one, falling within the scope of the appended claims.

## Claims

1. Conduit for conveying a flow of fluid under pressure having a pre-determined colour, comprising a tube with at least an inlet and at least an outlet for said fluid, said tube being substantially surrounded by a sheath with which it forms a substantially sealed jacket into which said fluid is capable of seeping in the case of a rupture in the tube, **characterized in that** at least a part of said sheath (10) is substantially transparent and there are provided alarm means (14) adapted to impart a different colour to the fluid seeping into the sealed jacket (13).

2. Conduit according to claim 1, **characterized in that** said alarm means are housed in the sealed jacket (13) and comprise a mass (14) of coloured material capable of diluting in the fluid seeping into the same sealed jacket.

3. Conduit according to claim 1, in which the fluid is a liquid, **characterized in that** said alarm means are housed in the sealed jacket (13) and comprise a mass (14) of dyeing material that is at least partially soluble in the liquid fluid seeping into the jacket (13).

4. Conduit according to claim 3, **characterized in that** said mass (14) is provided in the form of impregnation of a cloth ribbon, or the like, wound round said tube (3).

5. Home appliance comprising a conduit according to any of the preceding claims.
